# EUROPEAN PATENT APPLICATION

(11) **EP 3 587 008 A1**
(43) Date of publication of application: **01.01.2020**
(21) Application number: 19183688.1
(22) Date of filing: 01.07.2019
(51) Int. Cl.: B22F 7/06, B22F 3/00, F01D 5/02, B22F 5/00, B22F 5/04, B22F 7/08, B23P 15/00, B23P 15/04, F01D 5/30, F01D 5/34

(54) **FABRICATING COMPOSITE METALLIC COMPONENTS**

(30) Priority: 29.06.2018 US 201816023879
(71) Applicant: United Technologies Corporation, Farmington, CT 06032 (US)
(72) Inventor: HENEVELD, Benjamin, Arlington, MA Massachusetts 02474 (US); WAGNER, Joel H., Wethersfield, CT Connecticut 06109 (US); PAULUS, John, Afton, VA Virginia 22920 (US)
(74) Representative: Dehns

(57) **Abstract**

A method of fabricating a composite component is provided. The method includes manufacturing a cast metallic component (10) including a surface (11) and defining an attachment point (12) along the surface, placing a fugitive mold (20) defining an element feature against the surface such that the element feature aligns with the attachment point, filling the element feature with powdered metallic material and heating the cast metallic component and the powdered metallic material to a temperature above a sintering temperature of the powdered metallic material and below a melting temperature of the cast metallic component.

## Description

### BACKGROUND

Exemplary embodiments of the present disclosure relate generally to fabrication of composite metallic components and, in one embodiment, to methods of fabricating composite cast and sintered metallic components.

Various manufacturing methods and material systems have different advantages and drawbacks. Therefore, it may be advantageous to combine different manufacturing methods and material systems together in order to create composite components that enable synergistic benefits or to overcome the specific limitations of a single technology.

For example, a single crystal nickel-based super alloy casting exhibits superior material properties for high temperature creep resistance, but it may be difficult to cast certain geometries in a single crystal alloy without increasing manufacturing expenditures due to increased tooling costs or issues such as recrystallization. Similarly, geometry changes to a component with an already manufactured tool set can be expensive as they will often require complete new tooling. Likewise, components made from sintered powdered metals can be much less expensive to produce, allow for a wider range of geometric designs, but generally have less robust material properties.

### BRIEF DESCRIPTION

According to an aspect of the disclosure, a method of fabricating a composite component is provided. The method includes manufacturing a cast metallic component including a surface and defining an attachment point along the surface, placing a fugitive mold defining an element feature against the surface such that the element feature aligns with the attachment point, filling the element feature with powdered metallic material and heating the cast metallic component and the powdered metallic material to a temperature above a sintering temperature of the powdered metallic material and below a melting temperature of the cast metallic component.

In accordance with additional or alternative embodiments, the attachment point has undercut features and the undercut features include one or more of dovetails, zig-zags, spirals, curves and multi-directional extrusions.

In accordance with additional or alternative embodiments, the cast metallic component includes a fastening element for fastening a sintered element to the cast metallic component at the attachment point.

In accordance with additional or alternative embodiments, the element feature includes an opening with protruding undercuts.

In accordance with additional or alternative embodiments, the method further includes continuing the heating until the powdered metallic material is cured into an element attached to the surface at the attachment point and removing a remainder of the fugitive mold following the heating.

In accordance with additional or alternative embodiments, the heating results in up to 15% shrinkage of the element from a volume of the powdered metallic material at the attachment point.

In accordance with additional or alternative embodiments, the method further includes designing the attachment point such that the element tightens onto the cast metallic component during the heating.

In accordance with additional or alternative embodiments, the attachment point is designed such that the element has a tooth-root shape.

According to another aspect of the disclosure, a method of fabricating a composite component is provided and includes manufacturing a cast metallic component including a surface and defining dovetail-shaped attachment points along the surface, placing a fugitive mold defining openings with protruding undercuts against the surface such that each opening aligns with a corresponding one of the dovetail-shaped attachment points, filling the openings with powdered metallic material and heating the cast metallic component and the powdered metallic material to a temperature above a sintering temperature of the powdered metallic material and below a melting temperature of the cast metallic component.

In accordance with additional or alternative embodiments, each dovetail-shaped attachment point includes a neck section proximate to an uppermost portion of the surface and a tapered section having an increasing width with increasing depth from the neck section and each opening has a diameter which corresponds to a diameter of the neck section of the corresponding one of the dovetail-shaped attachment points.

In accordance with additional or alternative embodiments, each opening is corrugated.

In accordance with additional or alternative embodiments, the cast metallic component includes one or more fastening elements for fastening one or more sintered elements to the cast metallic component at one or more of the attachment points.

In accordance with additional or alternative embodiments, the method further includes continuing the heating until the powdered metallic material is cured into elements attached to the surface at each of the attachment points and removing a remainder of the fugitive mold following the heating.

In accordance with additional or alternative embodiments, the heating results in up to 15% shrinkage of the elements from a volume of the powdered metallic material at each of the attachment points.

In accordance with additional or alternative embodiments, the method further includes designing the attachment points such that each of the elements tighten onto the cast metallic component during the heating.

In accordance with additional or alternative embodiments, the attachment points are designed such that the elements have tooth-root shape.

According to yet another aspect of the disclosure, a composite component is provided and includes a cast metallic component including a surface and defining attachment points along the surface, elements of sintered powdered metallic material respectively comprising first and second parts, the first parts being respectively secured in a corresponding one of the attachment points, the second parts extending outwardly from corresponding ones of the first parts to protrude from the surface and the first and second parts cooperatively forming a tooth-root shape.

In accordance with additional or alternative embodiments, the attachment points each include attachment features that extend into the cast metallic component curvi-linearly outwardly and the first parts of each of the elements include sintered attachment protrusions that extend into the cast metallic component curvi-linearly outwardly.

In accordance with additional or alternative embodiments, the second parts of each of the elements are corrugated.

In accordance with additional or alternative embodiments, each of the first parts has a lesser volume than the corresponding one of the attachment points.

These and other advantages and features will become more apparent from the following description taken in conjunction with the drawings.

### BRIEF DESCRIPTION OF THE DRAWINGS

The following descriptions should not be considered limiting but are provided by way of example only. With reference to the accompanying drawings, like elements are numbered alike:
FIG. 1 is a side view of a cast metallic component with a surface and dovetail-shaped attachment points in accordance with embodiments;
FIG. 2 is a side view of a cast metallic component with a surface and zig-zag, spiral, curved and multi-directional extrusion attachment points in accordance with embodiments;
FIG. 3 is a side view of a fugitive mold with opening placed against the cast metallic component of FIG. 1 such that the openings align with the attachment points;
FIG. 4 is a side view of powdered metallic material filled into the openings of the fugitive mold of FIG. 3;
FIG. 5 is a side view of sintered elements securably attached to the cast metallic component at the attachment points once the powdered metallic material of FIG. 4 has been cured and a remainder of the fugitive mold of FIG. 4 has been removed;
FIG. 6 is an enlarged view of the encircled portion of FIG. 5; in accordance with embodiments;
FIG. 7 is a side view of an attachment point design that causes a tightening of the sintered elements of FIG. 5 due to curing in accordance with embodiments; and
FIG. 8 is a flow diagram illustrating a method of fabricating a composite component in accordance with embodiments.

These and other advantages and features will become more apparent from the following description taken in conjunction with the drawings.

### DETAILED DESCRIPTION

A detailed description of one or more embodiments of the disclosed apparatus and method are presented herein by way of exemplification and not limitation with reference to the Figures.

As will be described below, a fabrication method is provided in which composite components that have a robust structure are formed by cast metal and detailed complex features are formed by powdered metal.

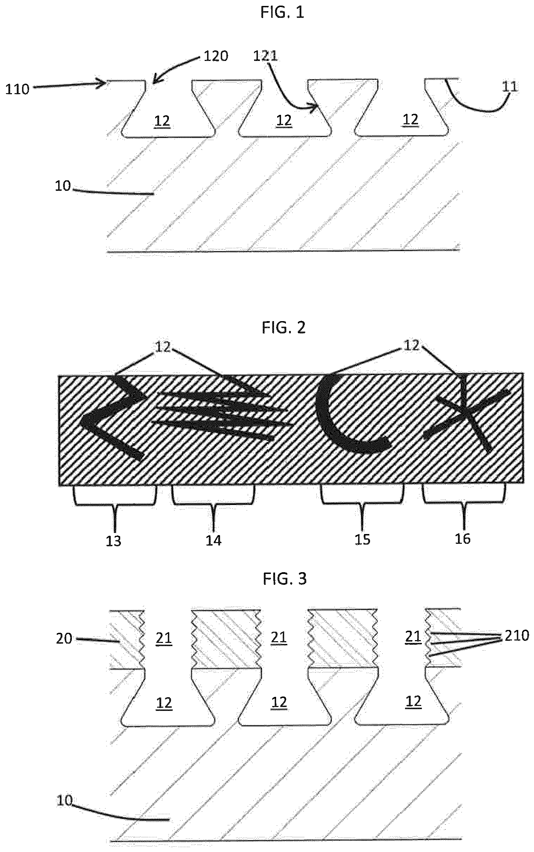

With reference to FIGS. 1-6, a method of fabricating a composite component is provided.

As shown in FIG. 1, a cast metallic component 10 is cast in an initial operation with one or more appropriate fabrication techniques. The cast metallic component 10 has a surface 11 and is formed to define attachment points 12. Each attachment point 12 extends inwardly relative to a body of the cast metallic component 10 from an uppermost portion 110 of the surface 11 and, in accordance with embodiments, may have a dovetail-shaped cross-section. That is, each attachment point 12 may have a relatively narrow neck section 120 at or proximate to the uppermost portion 110 of the surface 11 and a tapered section 121. The tapered section 121 extends inwardly from the neck section 120 and has an increasing width with increasing depth from the neck section 120 and thus forms protruding undercut portions 121.

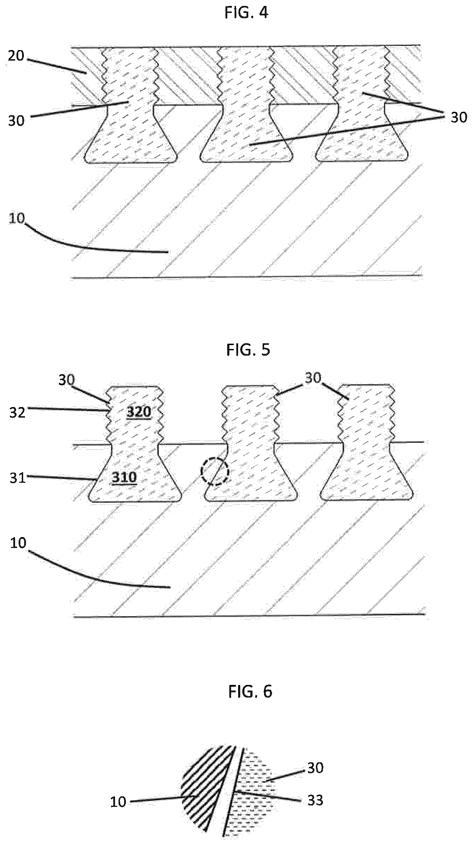

With reference to FIG. 2 and in accordance with alternative embodiments, it is to be understood that the attachment points can have various cross-sectional shapes and sizes and that, while the following description generally relates to the dovetail-shape case, this is not required. For example, as shown in FIG. 2, the attachment points 12 can be provided as zig-zag attachment points 13, spiral attachment points 14, curved attachment points 15 and multi-directional extrusion attachment points 16. In any case, the attachment points 12 should have a shape that can securely maintain a cured sintered element (see FIGS. 5 and 6) therein.

Next, as shown in FIG. 3, one or more fugitive molds 20 is placed against the surface 11 of the cast metallic component 10. The fugitive mold 20 may be configured to form or define engineered surface features or openings 21 that align with the attachment points 12. As a general matter, each of the openings 21 may have a more complex geometry than the attachment points 12 and, for example, they may have diameters that correspond to the diameters of the neck sections 120 (see FIG. 1) of the attachment points 12 and that may have protruding undercuts 210 or corrugations along longitudinal axes thereof.

Once the one or more fugitive molds 20 are placed against the surface 11, the openings 21 are filled with powdered metallic materials as shown in FIG. 4.

As shown in FIGS. 5 and 6, the powdered metallic materials cured into sintered elements 30 and remainders of the one or more fugitive molds 20 are removed. The curing involves heating the cast metallic component 10 and the powdered metallic materials to a temperature which is above the sintering temperature of the powdered metallic materials and below the melting point of the cast metallic component 10. The heating continues until the powdered metallic materials are sufficiently densified and form the sintered elements 30.

Each sintered element 30 has a cross-sectional shape which mimics the cross-sectional shapes of the attachment point 12 and the opening 21 it is formed in. Thus, each sintered element 30 has a first part 31 and a second part 32. The first part 31 is formed within the neck portion 120 and the tapered portion 121 of the corresponding attachment point 12. The second part 32 is integrally coupled to the first part 31 and extends from the first part 31 to protrude outwardly from the surface 11. In an event the corresponding attachment point 12 has a dovetail-shape and the corresponding opening 21 is corrugated, the first part 31 will have a corresponding dovetail-shape 310 and the second part 32 will have a corresponding corrugated shape 320.

In accordance with embodiments, a final volume of each of the sintered elements 30 may be reduced from an initial volume of the powdered metallic material of the corresponding attachment point 12 and the corresponding opening 21. This volume reduction is a consequence of the curing process and may result in up to 15% reduction in volume. This can be seen in FIG. 6 in which the local edge 33 of the sintered element 30 is shown as having receded from the edge of the tapered section 121 of the corresponding attachment point 12.

To the extent that the volume reduction or shrinkage illustrated in FIG. 6 occurs, the cross-sectional shapes of the attachment points 12 are designed to secure the sintered elements 30. For the dovetail-shaped attachment points 12, the diameter of the neck portion 120 (see FIG. 1) should be sufficiently small as compared to the proximal portion of the tapered section 121 (see FIG. 1) so as to limit potential movement of the resulting sintered element 30 with the volume reduction having occurred.

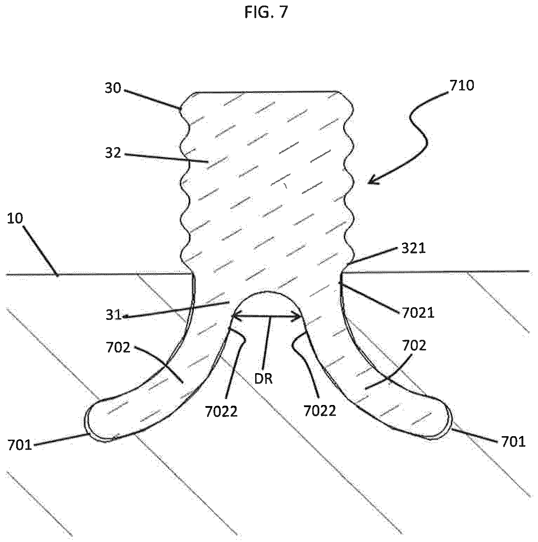

With reference to FIG. 7 and, in accordance with further embodiments of the invention, the securing of the sintered elements 30 in the attachment points may be achieved by the use of fasteners to fasten the sintered elements 30 in the attachment points 12 or by the design or geometry of the attachment points 12 whereby the sintered elements 30 tighten into position even with the volume reduction occurring (see FIG. 7).

That is, as shown in FIG. 7, the geometry of the attachment point 12 includes two or more attachment features 701 for a given sintered element 30. These attachment features 701 may be defined substantially opposite one another and may be designed such that the shrinkage of the sintered element 30 during the sintering thereof automatically results in a compression pressure being exerted between the sintered attachment protrusions 702 and the substrate material in and around the sintered attachment protrusions 702. The compression pressure serves to prevent the movement of the sintered element 30 with respect to the cast metallic component 10 and may increase an effective heat transfer between the cast metallic component 10 and the sintered element 30.

In particular, the attachment features 701 may extend into the cast metallic component 10 curvi-linearly outwardly such that the resulting sintered attachment protrusions 702 similarly extend into the cast metallic component 10 curvi-linearly. The attachment features 701 taper away from each other with increasing depth into the cast metallic component 10 and the sintered attachment protrusions 702 similarly taper away from each other with increasing depth into the cast metallic component 10. Each attachment feature 701 and each corresponding sintered attachment protrusion 702 can have a substantially similar radius of outward curvature. Outer surfaces 7021 of the sintered attachment protrusions 702 may be nearly aligned in a radial dimension with an exterior surface 321 of the second part 32 and inner surfaces 7022 of the sintered attachment protrusions 702 may be separated from one another by a radial distance DR. The first and second parts 31 and 32 of the given sintered element 30 thus cooperatively form a tooth-root shaped element 710.

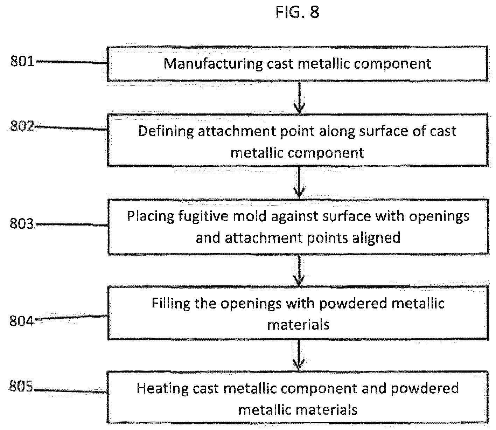

With reference to FIG. 8, a method of fabricating a composite component is provided. As shown in FIG. 8, the method includes manufacturing a cast metallic component comprising a surface (801) and defining an attachment point along the surface (802), placing a fugitive mold defining an element feature against the surface such that the element feature aligns with the attachment point (803), filling the element feature with powdered metallic material (804) and heating the cast metallic component and the powdered metallic material to a temperature above a sintering temperature of the powdered metallic material and below a melting temperature of the cast metallic component (805).

Benefits of the features described herein are the provision for production of a composite component that takes advantage of the beneficial properties of different manufacturing techniques and material systems. The fabrication methods can rely on a cast substrate for structural and creep resistance purposes and can use powdered metal features to create additional surface area or detailed geometry that could not be achievable with cast metal due to recrystallization, tooling costs or other limitations. Additionally, tooling costs for a fugitive mold is significantly less than for a traditional wax pattern tool set. This allows for multiple different fugitive molds to be used on a single substrate thereby allowing numerous and varying designs to be produced and tested while requiring less tooling cost and time as compared to having to use different traditional tool sets. This can in turn allow for multiple complex designs to be built and tested for less cost than a single complex design, which is fabricated using conventional techniques and can result in faster innovations and a more valuable final product.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of fabricating a composite component, the method comprising:
manufacturing a cast metallic component (10) comprising a surface (11) and defining an attachment point (12) along the surface;
placing a fugitive mold (20) defining an element feature against the surface such that the element feature aligns with the attachment point;
filling the element feature with powdered metallic material; and
heating the cast metallic component and the powdered metallic material to a temperature above a sintering temperature of the powdered metallic material and below a melting temperature of the cast metallic component.

2. The method according to claim 1, wherein:
the attachment point (12) has undercut features, and
the undercut features comprise one or more of dovetails, zig-zags (13), spirals (14), curves (15) and multi-directional extrusions (16).

3. The method according to claim 1 or 2, wherein the cast metallic component (10) comprises a fastening element for fastening a sintered element (30) to the cast metallic component at the attachment point (12).

4. The method according to claim 1, 2 or 3, wherein the element feature comprises an opening (21) with protruding undercuts (210).

5. The method according to any preceding claim, further comprising:
continuing the heating until the powdered metallic material is cured into an element attached to the surface at the attachment point (12); and
removing a remainder of the fugitive mold (20) following the heating, and optionally
wherein the heating results in up to 15% shrinkage of the element from a volume of the powdered metallic material at the attachment point (12).

6. The method according to claim 5, further comprising designing the attachment point (12) such that the element tightens onto the cast metallic component (10) during the heating, and/or
wherein the attachment point (12) is designed such that the element has a tooth-root shape.

7. A method of fabricating a composite component, the method comprising:
manufacturing a cast metallic component (10) comprising a surface (11) and defining dovetail-shaped attachment points (12) along the surface;
placing a fugitive mold (20) defining openings (21) with protruding undercuts (210) against the surface such that each opening aligns with a corresponding one of the dovetail-shaped attachment points;
filling the openings with powdered metallic material; and
heating the cast metallic component and the powdered metallic material to a temperature above a sintering temperature of the powdered metallic material and below a melting temperature of the cast metallic component.

8. The method according to claim 7, wherein:
each dovetail-shaped attachment point (12) comprises a neck section (120) proximate to an uppermost portion of the surface and a tapered section (121) having an increasing width with increasing depth from the neck section, and
each opening (21) has a diameter which corresponds to a diameter of the neck section of the corresponding one of the dovetail-shaped attachment points, and optionally
wherein each opening is corrugated.

9. The method according to claim 7 or 8, wherein the cast metallic component (10) comprises one or more fastening elements for fastening one or more sintered elements (30) to the cast metallic component at one or more of the attachment points (12).

10. The method according to any of claims 7 to 9, further comprising:
continuing the heating until the powdered metallic material is cured into elements attached to the surface at each of the attachment points (12); and
removing a remainder of the fugitive mold (20) following the heating, and optionally
wherein the heating results in up to 15% shrinkage of the elements from a volume of the powdered metallic material at each of the attachment points (12).

11. The method according to claim 10, further comprising designing the attachment points (12) such that each of the elements tighten onto the cast metallic component (10) during the heating, and/or
wherein the attachment points are designed such that the elements have tooth-root shape.

12. A composite component, comprising:
a cast metallic component (10) comprising a surface (11) and defining attachment points (12) along the surface;
elements of sintered powdered metallic material (30) respectively comprising first and second parts,
the first parts (310) being respectively secured in a corresponding one of the attachment points,
the second parts (320) extending outwardly from corresponding ones of the first parts to protrude from the surface, and
the first and second parts cooperatively forming a tooth-root shape.

13. The composite component according to claim 12, wherein:
the attachment points (12) each comprise attachment features (701) that extend into the cast metallic component (10) curvi-linearly outwardly, and
the first parts of each of the elements comprise sintered attachment protrusions (702) that extend into the cast metallic component curvi-linearly outwardly.

14. The composite component according to claim 12 or 13, wherein the second parts (320) of each of the elements are corrugated.

15. The composite component according to claim 12, 13 or 14, wherein each of the first parts (310) has a lesser volume than the corresponding one of the attachment points (12).
